Europäisches Patentamt

(19) European Patent Office

Office européen des brevets

(11) EP 0 559 231 B1

(12) **EUROPEAN PATENT SPECIFICATION**

(45) Date of publication and mention
of the grant of the patent:
**07.02.1996 Bulletin 1996/06**

(51) Int. Cl.⁶: $B62M\ 23/02$

(21) Application number: **93103706.3**

(22) Date of filing: **08.03.1993**

(54) **Bicycle with electric motor**

Fahrrad mit Elektromotor

Bicyclette avec moteur électrique

(84) Designated Contracting States:
**DE FR IT**

(30) Priority: **06.03.1992 JP 82917/92**

(43) Date of publication of application:
**08.09.1993 Bulletin 1993/36**

(73) Proprietor: **YAMAHA HATSUDOKı KABUSHIKı
KAISHA
Iwata-shi Shizuoka-ken, 438 (JP)**

(72) Inventors:
 • **Takata, Nozumu
  Iwata-shi, Shizuoka-ken 438 (JP)**
 • **Yokoyama, Tatsuji
  Iwata-gun, Shizuoka-ken 438 (JP)**

(74) Representative: **Grünecker, Kinkeldey,
Stockmair & Schwanhäusser
Anwaltssozietät
D-80538 München (DE)**

(56) References cited:
 **FR-A- 2 259 741          GB-A- 2 083 423**

 • **Patent Abstracts of Japan vol. 14,no.113(M-944)
  2 March 1990 & JP-A-13 14 685(JAPAN II M KK)
  19.December 1989**
 • **Patent Abstracts of Japan vol.14,no.262(M-
  981)(4205) 6 June 1990 &JP-A-20 74 491
  8MAAAAAAAATSUSHITA ELECTRIC WORKS
  LTD) 14 March 1990**

## Description

The present invention relates to a bicycle comprising a manpowered drive system and an electric motor drive system in parallel to each other and a method for powering such a bicycle.

Known bicycles which comprise a manpower drive system and an assistant electric drive system in parallel to each other, such as shown in Japanese utility model application publication 56-76590 and Japanese patent application 2-74491 usually control the output of the electric drive system in dependency of the change in the pedal depressing force of the manpower drive system.

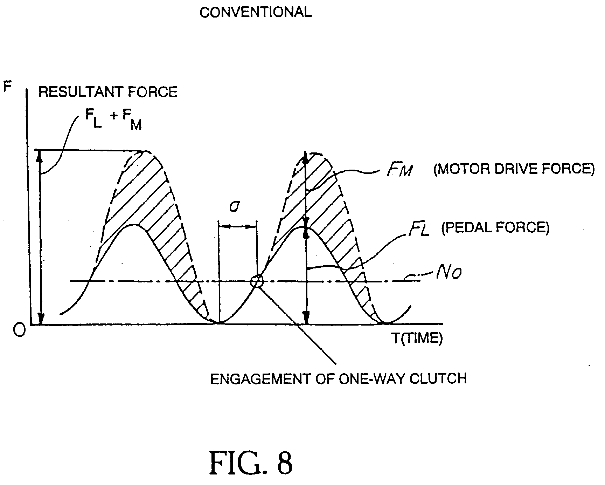

More specifically, the driving force of the electric motor of the electric motor drive system is increased in proportion to the magnitude of the pedal depressing force. Therefore, as soon as the pedal is moved a little from a top dead centre toward the bottom dead centre, the electric motor is started. Thus, the driving force of the electric motor is increased in proportion to the magnitude of the pedal depressing force to eleviate the effort of the rider. On the other hand, there is a one-way clutch interposed in the motor drive system to prevent the electric motor from being rotated when the electric motor is not energized or the speed of the bicycle attained by the rider is faster than the speed of the bicycle corresponding to current motor revolution speed. As said one-way clutch is disengaged from the time when the motor speed is almost zero to the time when the motor speed reaches the motor revolution speed $N_O$ which corresponds to the bicycle's cruising speed, the driving force $F_M$ of the electric motor does not add to the driving force of the manpower drive system during the afore-indicated period. As a result, the motor driving force $F_M$ is delayed relative to the pedal force $F_L$ by an amount a required for the acceleration of the electric motor. Said conditions are shown in Figure 8.

As is also apparent from said figure, the driving force or pedal depressing force $F_L$ of the rider inputted from the crank pedal varies with a period of a half turn of the crank shaft because the pedal depressing force $F_L$ approaches zero when the crank pedal approaches the top dead centre or bottom dead centre respectively.

Figure 8 shows the change in the driving force of the pedal depressing force $F_L$ produced by the rider against the time t. The periodical change in the pedal depressing force $F_O$ corresponds to the half turn of the crank pedal. Accordingly, the bicycle runs at a cruising speed obtained by the resultant force which is the total of the pedal depressing force $F_L$ and the motor driving force $F_M$. Conventionally, the periodical change of the pedal depressing force $F_L$ is detected and the driving force of the electric motor is increased or decreased accordingly, as is apparent from Figure 8. The electric motor is controlled such that its speed or driving force $F_M$ approaches zero every time the pedal force $F_L$ approaches zero and that the driving force $F_M$ of the electric motor is made positive to accelerate the electric motor by increasing the voltage $V_M$ of the electric motor as the pedal depressing force $F_L$ turns into positive. In this way, the driving force $F_M$ of the electric motor changes periodically between a value of approximately zero and a required value.

However, there remains the delay of the activation of the electric motor by the amount a relative to the pedal force $F_L$ due the disengagement of the one-way clutch when the revolution speed of the electric motor is almost zero while a full engagement condition of the one-way clutch is acquired only when the motor revolution speed reaches value $N_O$ which corresponds to the bicycle cruising speed.

Accordingly, it is an object of the present invention to provide a bicycle and a method of powering same as indicated above which avoids delayed contribution of the motor driving force to the total driving force of the bicycle rendering the driving force $F_M$ of the electric motor to follow the pedal depressing force ($F_L$) of the rider undelayed, thus, improving the response characteristics of the electric motor drive system thereby, improving the efficiency of energy used.

According to the present invention, the afore-indicated objective is performed in terms of a method for powering the bicycle as indicated above by means of that the bicycle speed and the pedal depressing force are detected and that a non-load motor voltage at which the revolution speed of the electric motor corresponds to said bicycle speed is derived at the minimal motor drive voltage supply to said electric motor irrespective of the pedal depressing force detected.

Moreover, in view of improving a bicycle as indicated above, the present invention is characterised by a pedal depressing force detecting means and a bicycle speed detecting means to input signals responsive to the pedal depressing force and the bicycle speed into a controller to determine a revolution speed of the electric motor which corresponds to said bicycle speed and to determine a motor torque which corresponds to the pedal depressing force in order to derive a non-load motor voltage as a minimal driving voltage of the electric motor.

Preferred embodiments of the present invention are laid down in the further sub-claims.

Accordingly, the present invention is advantageous in that the delay in obtaining full support of the riders powering of the bicycles through the assistant electric motor drive system is removed by means of keeping the drive voltage of the electric drive motor on a level which at least corresponds to the bicycle cruising speed so that a period of time at which the revolution speed of the electric motor is below a revolution speed $N_O$ (corresponding to the cuising speed of the bicycle) does no longer occur and the minimal drive voltage of the electric motor is a non-load motor voltage $V_{MO}$ corresponding to said bicycle cruising speed detected.

In principle, the present invention is based on the following conditions:
In a DC motor, the following equation exists among the voltage ($V_M$) applied to the motor, the current (I) through the motor, and the revolution (N) of the motor:

$$V_M = I \cdot R + k \cdot N$$

where R is the equivalent resistance of th armature, k is the coefficient of proportion, and $k \cdot N$ represents the counter-electromotive force of the armature.

The motor torque ($T_M$), while it depends on whether the motor is of the series or shunt type, is generally in proportion to the motor current (I). Therefore, the following equation exists with C as a constant:

$$T_M = C \cdot I$$

Therefore, assuming $(R/C) = j$, the following equation is derived:

$$V_M = j \cdot T_M + k \cdot N \qquad (1)$$

In the equation (1) above, the first term ($j \cdot T_M$) on the right side is related to the torque, and the second term ($k \cdot N$) is related to the revolution.

In conventional devices, it is intended when the pedal force $F_L$ becomes zero to make the motor revolution N zero by making the motor drive force $F_M$ zero. Namely, it is made in the equation (1) that $T_M = 0$, and N = 0. Therefore, control is made so that the voltage $V_M$ applied to the motor is also made zero.

In this invention on the other hand, the motor revolution N is maintained at $N_\emptyset$ even when the pedal force $F_L$ becomes zero. Namely, it is made that the revolution $N = N_\emptyset$ at the motor torque $T_M = 0$ at the time of no load. Therefore, from the equation (1),

$$V_M = j \cdot 0 + k \cdot N_\emptyset = k.N_\emptyset$$

Assuming the voltage $V_M$ as a non-load motor voltage $V_{MO}$ and maintaining the motor voltage at this $V_{M\emptyset}$ when the motor voltage $V_M$ decreases below $V_{M\emptyset}$, the motor revolution N is maintained at $N_\emptyset$ even when the pedal force $F_L$ decreases. As a result, when the pedal force $F_L$ increases such that $V_M \geq V_{M\emptyset}$, the motor has only to produce the drive force $F_M$ from the revolution $N_\emptyset$, the time delay otherwise required for the acceleration of the motor is eliminated and the energy ($E_a$) for the acceleration becomes unnecessary.

Since the current I becomes extremely small for the period of non-load motor voltage $V_{M\emptyset}$ for maintaining the motor revolution at $N_\emptyset$, the consumed energy $E_\emptyset$ is extremely smaller than the energy $E_a$ required for the acceleration, or $E_\emptyset \ll E_a$. As a result, efficiency is improved.

In the following, the present invention is explained in greater detail by means of an embodiment thereof in conjunction with the accompanying drawings wherein:

Figure 1 is a side view of a powered bicycle according to an embodiment of the present invention,

Figure 2 is a block diagram of the drive train for powering the bicycle of Figure 1,

Figure 3 is a partial bottom view of the drive system and drive train for powering the bicycle of Figure 1,

Figure 4 is a schematic side view of a pedal depressing force detecting unit of the drive system of Figure 3,

Figure 5 is a cross-section along the line V - V in Figure 4,

Figure 6 is a diagram of the output characteristic of the electric motor of the electric motor drive system of the bicycle according to Figure 1,

Figure 7 is a diagram showing the periodical changes of the pedal depressing force and the electric motor driving force according to the embodiment of the present invention, and

Figure 8 is a diagram of the varying driving force of a drive system as conventional.

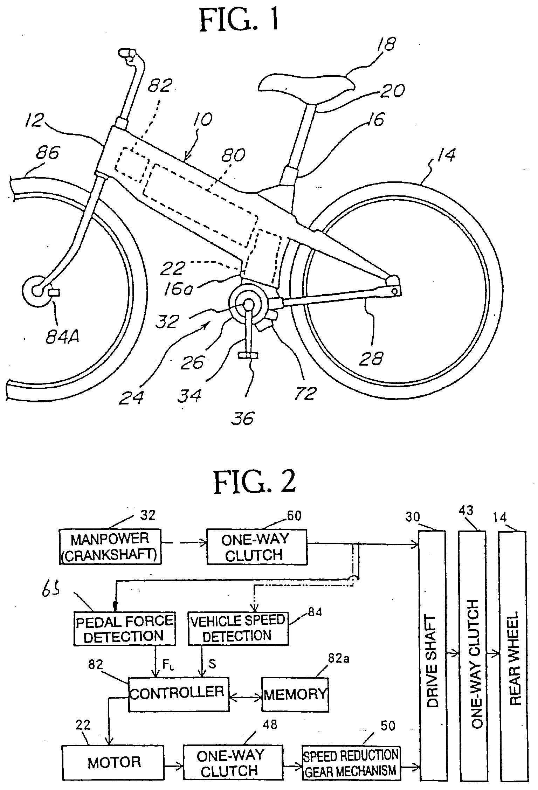

In Fig. 1 a main frame 10 extends from a head pipe 12 obliquely downward to the shaft of the rear wheel 14. A seat tube 16 is secured approximately perpendicular to the main frame 10. A seat post 20 supporting a saddle 18 is secured to the top end of the seat tube 16.

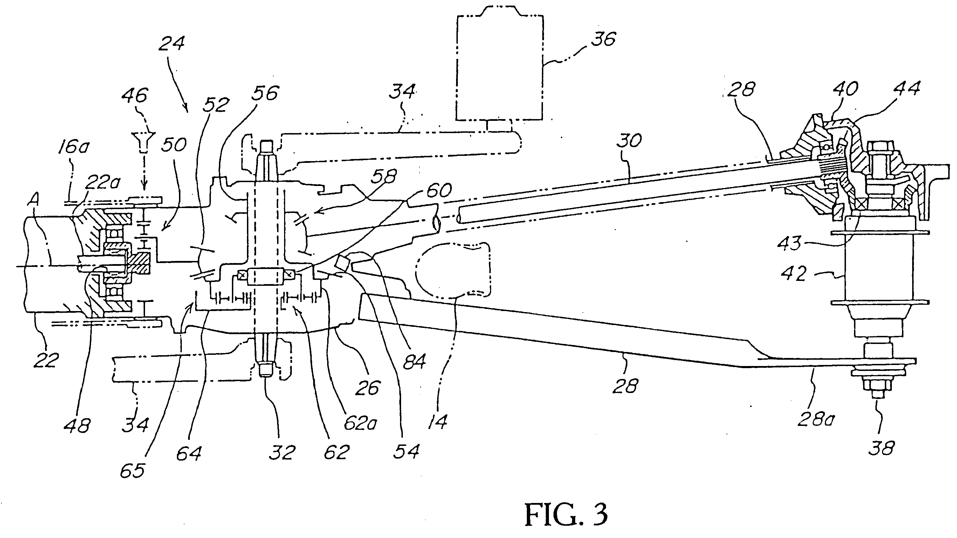

A cylindrical portion 16a opening downward is formed at the bottom portion of the seat tube 16 in which a DC motor 22 is housed. A power unit 24 is secured to the bottom end of the seat tube 16. The power unit 24 is provided with a bottom bracket case 26 (hereinafter called BB case), and a rear stay 28 extending backward from the BB case 26. A rear wheel 14 is attached to the rear end of the rear stay 28. A drive shaft 30 is passed through the right side rear stay 28 (as shown in Fig. 3).

The power unit 24 is explained below. As shown in Figs. 1 and 3, a crankshaft 32 is passed through the BB case 26 and cranks 34 are secured to both ends of the crankshaft 32. Each of the cranks 34 is provided with a crank pedal 36.

The left end of the wheel shaft 38 for the rear wheel 14 is secured to an end plate 28a secured to the left rear stay 28. The right end of the wheel shaft 38 is secured to a bevel gear case 40 secured to the right rear stay 28. A hub 42 is supported for free rotation on the wheel shaft 38. The rotation of the drive shaft 30 is transmitted via a bevel gear mechanism 44 and a one-way clutch 43 to the hub 42.

The electric motor 22 is fit and secured to the BB case from above as shown in Fig. 3, with its motor shaft 22a is located near the center in the vehicle width direction and perpendicular to the crankshaft 32. The BB case 26 is inserted, fitted, and joined to the cylindrical portion 16a by inserting the motor 22 into the cylindrical portion 16a from under upward and securing with four bolts 46 (Refer to Fig. 3).

The revolution of the motor 22 is transmitted as shown in Fig. 3 via the one-way clutch 48, a planetary reduction gear mechanism 50, a small bevel gear 52, and a large bevel gear 54 to a cylindrical, resultant force shaft 56 supported for free rotation on the crankshaft 32. The rotation of the resultant force shaft 56 is transmitted through a bevel gear mechanism 58 to the drive shaft 30.

The rotation transmitted from the rear wheel 14 toward the motor 22 is interrupted by a one-way clutch 43 incorporated in the hub 42. The planetary reduction gear mechanism 50 described above is of a known type located between a sun gear rotated by the motor 22 and a ring gear secured to the BB case 26 to transmit the revolution of the planetary gear engaging with those gears to the small bevel gear 52.

The rotation caused by the manpower input from the pedal 36 is transmitted via a one-way clutch 60, and a planetary speed-increasing gear mechanism 62 to the large bevel gear 54. As a result, the rotation inputted from the crankshaft 32 is transmitted via the resultant force shaft 56, and the bevel gear mechanism 58 to the drive shaft 30. Owing to the one-way clutch 48, the rotation of the crankshaft 32 is not transmitted to the motor 22 when the motor 22 is not energized. On the other hand, owing to the one-way clutch 60, the rotation of the motor 22 is not transmitted to the crankshaft 32 when the crankshaft 32 is not rotating or is reversing.

Here, the drive shaft 30 is located on the right side of the plane A which is in the longitudinal direction of the vehicle and passes through the motor shaft 22a (Refer to Fig. 3).

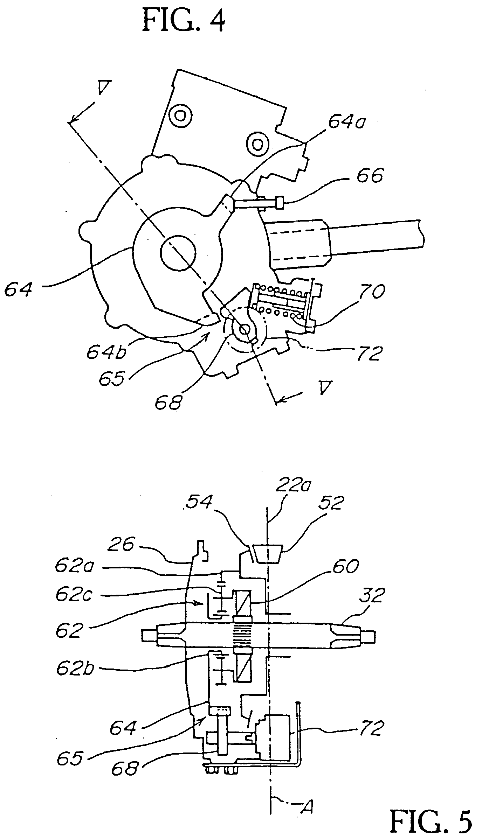

The planetary speed-increasing gear mechanism 62 comprises as shown in Figs. 3 and 5 a ring gear 62a secured to the large bevel gear 54, a sun gear 62b secured to a pedal force detection lever 64, and a planetary gear 62c interposed between those components. The crankshaft 32 causes revolution of the planetary gear 62c through a one-way clutch 60.

The pedal force detection lever 64 is a component of pedal force detection means 65 located on the left of said plane A.

The lever 64 of the pedal force detection means 65 is provided with projections 64a and 64b as shown in Figs. 4 and 5. The projection 64a comes in contact with a stopper 66 when the lever 64 rotates clockwise to restrict the rotation of the lever 64 in the clockwise direction as seen in Fig. 4 or in the direction opposite the direction of the depressing force applied to the pedal 36. The projection 64b comes in contact with a second lever 68 when the lever 64 is rotated counterclockwise. The counterclockwise rotation of the lever 64 causes the second lever 68 to rotate clockwise.

A return spring 70 applies a return force to the second lever 68. As a result, the lever 64 is given a return force in the clockwise direction as seen in Fig. 4. The amount of rotation of the second lever 68 is transmitted to a potentiometer 72 functioning as a pedal force sensor. As a result, the lever 64 rotates in proportion to the depressing force on the pedal 36 in the counterclockwise direction as seen in Fig. 4. Since the second lever 68 is rotated clockwise, the depressing force can be determined from the amount of rotation of the potentiometer 72.

In Fig. 1 are shown a chargeable battery such as a lead battery 80, and a controller 82. They are housed in a space between the head pipe 12 of the main frame 10 and the seat tube 16. In Fig. 3 is shown vehicle speed detection means disposed opposite the large bevel gear 56. Means of a known structure may be used to detect electromagnetically or optically the rotation of the large bevel gear.

The pedal force $F_L$ detected by the potentiometer 72 and the vehicle speed S detected by the vehicle speed detection means 84 are inputted to a controller 82. The controller 82 controls the motor current according to the pedal force $F_L$ and the vehicle speed S and causes the motor torque $T_M$ to be generated.

More specifically, the controller determines the motor speed $N_\emptyset$ which corresponds to the vehicle speed S, and the motor torque $T_M$ which corresponds to the pedal force $F_L$. As a matter of course, the data used for this calculation are stored in advance in a memory 82a (Fig. 2). The voltage $V_M$ applied to the motor according to the equation (1). In the equation (1), $j > 0$ and $T_M \geqq 0$. Therefore, $V_M \geqq V_{MO}$. Namely, the motor voltage $V_M$ is made not to go below $V_{MO}$.

The controller then determines the non-load motor voltage $V_{MO}$ ($= k \cdot N_O$) at the motor speed $N_\emptyset$ which corresponds to the vehicle speed S.

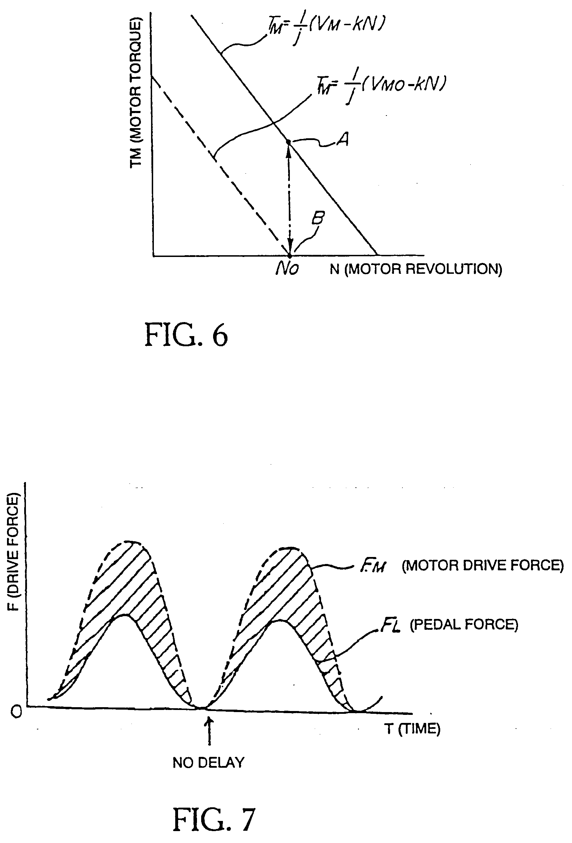

Referring now to Fig. 6, the characteristic of the equation (1) is linearly decreasing with a gradient $-(k/j)$ to the right as shown with a solid line. If a motor voltage $V_M$ for causing a motor torque $T_M$ determined by a given depressing force $F_L$ is calculated from the motor revolution $N_\emptyset$ at the corresponding time from the equation (1), the operation point is the point A shown in Fig. 6.

Here, it is assumed that the pedal force $F_L$ is decreased. Since the vehicle speed S is considered to remain unchanged by inertia, the controller 82 causes the $V_M$ only to decrease while leavig the motor revolution $N_\emptyset$ unchanged. In other words, the operation point A moves vertically up and down on the straight line AB where the revolution is $N_\emptyset$. When the pedal force $F_L$ becomes almost zero, $V_M = V_{MO} = kN_\emptyset$, and the controller 82 maintains the motor voltage $V_M$ at $V_{M\emptyset}$. As a result, the operation point of the motor is maintained at the point B.

When the pedal force $F_L$ increases to cause $V_M > V_{MO}$, the operation point moves from the point B to the point A. Since the motor is rotating already at the revolution $N_\emptyset$ at this time, no delay is produced for the one-way clutch 48 to be engaged by the acceleration of the motor. Namely the delay (a) described in Fig. 7 is almost zero, as shown in the diagram of Fig. 7.

Thus, the electric motor 22 always operates between A and B in Fig. 7.

While the vehicle speed detection means 84 is disposed opposite the large bevel gear 54 in the embodiment described above, the means 84 may be disposed on the front wheel 86 as shown in Fig. 1 with the symbol 84A. However, in the case the means 84 is disposed between the crankshaft 32 and the one-way clutch 43 as the embodiment, the revolution $N_\emptyset$ becomes gradually zero if the crankshaft 32 is topped. At this time, the no load motor voltage $V_{MO}$ is also made zero and the energy consumption is further reduced.

The values and data $F_M$, $V_M$, $T_M$, N, and $N_\emptyset$ used in the calculation of this invention may be changed within the range where the effect of the invention is attained and this invention includes such a range. The non-load motor voltage $V_{MO}$ for instance may be higher or lower than $kN_\emptyset$ calculated from the equation (1).

While the rear wheel 14 is driven by a power train of a shaft drive mechanism using the drive shaft 30 in the embodiment described above, this invention may also be embodied by a power train of a chain drive mechanism in which a sprocket is secured to the resultant force shaft 56 to drive the rear wheel 14.

Effect of the Invention

According to the invention described above, since the motor voltage $(V_M]$ is controlled not to go below the non-load motor voltage $(V_{MO})$ when the motor voltage $(V_M)$ corresponding to the pedal force $(F_L)$ comes down to the no load voltage $(V_{MO})$ at the motor revolution $(N_\emptyset)$ which corresponds to the vehicle speed, the motor revolution (N) does not go below the revolution $(N_\emptyset)$ which corresponds to the vehicle speed even if the decrease in the pedal force $(F_L)$ is repeated periodically. As a result, acceleration and deceleration of the motor are almost eliminated, delay of the motor drive force $(F_M)$ relative to the pedal force $(F_L)$ is made small, and the riding impression is improved. The elimination of accelration and deceleration of the motor also reduces energy consumption and improves efficiency.

**Claims**

1. Method for powering a bicycle comprising a rider-operated manpower drive system and an electric motor drive system in parallel to each other, with the output of the electric motor drive system being controlled in response to variations of a pedal depressing force of the man power drive system, **characterised in that,** a bicycle speed and the pedal depressing force $(F_L)$ are detected and that a non-load motor voltage $(V_{MO})$ at which the revolution speed $(N_O)$ of the electric motor (22) corresponds to said bicycle speed is derived as a minimal motor drive voltage supplied to the electric motor (22) irrespective of the pedal depressing force $(F_L)$ detected.

2. Method according to claim 1, **characterised in that,** the revolution speed $(N_O)$ of the electric motor (22) which corresponds to the bicycle speed (S) and motor torque $(T_M)$ which corresponds to the pedal depressing force $(F_L)$ are determined and the non-load motor voltage $(V_{MO})$ is derived from said revolution speed $(N_O)$.

3. A bicycle comprising a manpower drive system and an electric motor drive system in parallel to each other, with the output of said electric motor drive system being generally controlled in dependency of the pedal depressing force of a rider, and with a one-way clutch interposed between a drive shaft and the electric motor of the electric motor drive system, **characterised in that**, a pedal depressing force detecting means (65) and a bicycle speed detecting means (84) are provided to input the pedal depressing force and bicycle speed responsive signals into a controller (82) which determines a revolution speed $(N_O)$ of the electric motor (22) which corresponds to the vehicle speed (S), and a motor torque $(T_M)$ which corresponds to the pedal depressing force $(F_L)$ and a non-load motor voltage $(V_{MO})$ as a minimal driving voltage of the electric motor (22) irrespective of the pedal depressing force $(F_L)$ detected.

4. A bicycle as claimed in claim 3 **characterised in that**, a crankshaft (32) of the manpower drive system, via a one-way clutch (60), is coupled to a drive shaft (30) which, in turn, drives a rear wheel (14) of the bicycle via another one-way clutch (43).

5. A bicycle as claimed in claim 4 **characterised in that**, the pedal depressing force detecting means (65) receives a signal through the one-way clutch (60) downstream of the crankshaft (32) and said pedal depressing force detecting means (65) and the bicycle speed detecting means (84) feed the controller (82) which directly controls the electric motor (22), said electric motor (22) driving said drive shaft (30) via another one-way clutch (48) and a speed reduction gear mechanism (50).

6. A bicycle as claimed in at least one of the preceding claims 3 to 5, **characterised in that**, a chargeable battery (80) and the controller (82) are housed in a space formed by a frame member between a head pipe (12) and a seat tube (16) of a main frame (10) of the bicycle whereas the DC electric motor (22) is provided at a bottom end of the seat tube (16).

7. A bicycle as claimed in at least one of the preceding claims 3 to 6, **characterised in that**, the rotation of the drive shaft (30) is transmitted via a bevel gear mechanism (44) and the one-way clutch (43) to a hub (42) of the rear wheel (14).

8. A bicycle as claimed in claim 6 or 7, **characterised in that**, the electric motor (22) is secured to a bottom bracket case (26) at the lower end of the seat tube (16) with its motor shaft (22a) located near the centre in the bicycles widthwise direction, said motor shaft (22a) extending perpendicularly to the crankshaft (32).

9. A bicycle as claimed in at least one of the preceding claims 1 to 8, **characterised in that**, a torque of the motor shaft (22a) of the electric motor (22) is transmitted via the one-way clutch (48), the planatory reduction gear mechanism (50), a small bevel gear (52) and a large bevel gear (54) to a cylindrical, resultant force shaft (56) supported for free rotation on the crank shaft (32), wherein the rotation of the resultant force shaft (56) is transmitted through a bevel gear mechanism (58) to the drive shaft (30).

10. A bicycle as claimed in at least one of the preceding claims 1 to 9, **characterised in that**, the rotation transmitted from the rear wheel (14) toward the electric motor (22) is interrupted by the one-way clutch (43) incorporated in the hub (42) of the rear wheel (14).

11. A bicycle as claimed in at least one of the preceding claims 1 to 10, **characterised in that**, the manpower input to the crankshaft (32) is transmitted by the one-way clutch (60) and a planatory speed increasing gear mechanism (62) to the large bevel gear (54).

12. A bicycle as claimed in claim 11, **characterised in that**, the planatory speed increasing gear mechanism (62) comprises a sun gear (62a) secured to a large bevel gear (54), a ring gear (62b) secured to a pedal force detection lever (64) and a planatory gear (62c) interposed between those components, said planatory gear (62c) being driven through the crankshaft (32) through the one-way clutch (60).

13. A bicycle as claimed in at least one of the preceding claims 1 to 12, **characterised in that**, the pedal depression detection means (65) comprises a first lever (64) having first and second projections (64a,64b), one of which (64a) engages a stopper (66) when the lever (64) is rotated clockwise to a further clockwise rotation of the first lever (64) whereas the other one (64b) engages a second lever (68) when the first lever (64) is rotated counter-clockwise causing said second lever (68) to rotate in a clockwise direction against the biasing force of a return spring (70) which applies a return force to the second lever (68).

14. A bicycle as claimed in claim 13, **characterised in that**, the rotation of the second lever (68) is transmitted to a potentiometer (72) which indicates the pedal depressing force ($F_L$).

## Patentansprüche

1. Verfahren zum Antreiben eines Fahrrades mit einem fahrerbetätigten Muskelkraft- Antriebssystem und einem Elektromotor-Antriebssystem parallel zueinander, wobei die Ausgangsleistung des Elektromotor-Antriebssystemes in Abhangigkeit von Veränderungen einer Pedal-Niederdrückkraft des Muskelkraft-Antriebssystemes gesteuert wird, **dadurch gekennzeichnet**, daß eine Fahrradgeschwindigkeit und die Pedal-Niederdrückkraft ($F_L$) erfaßt werden und daß eine Nichtbelastungs-Motorspannung ($V_{MO}$), bei der die Drehzahl ($N_O$) des Elektromotors (22) der Fahrradgeschwindigkeit entspricht, als minimale Motor-Antriebsspannung abgeleitet wird, die dem Elektromotor (22) unabhängig von der erfaßten Pedal-Niederdrückkraft ($F_L$) zugeführt wird.

2. Verfahren nach Anspruch 1, **dadurch gekennzeichnet**, daß die Drehzahl ($N_O$) des Elektromotors (22), die der Fahrradgeschwindigkeit (S) entspricht und ein Motordrehmoment ($T_M$), welches der Pedal-Niederdrückkraft ($F_L$) entspricht, bestimmt werden und die Nichtbelastungs-Motorspannung ($V_{MO}$) von der Drehzahl ($N_O$) abgeleitet wird.

3. Fahrrad mit einem Muskelbetätigungs-Antriebssystem und einem Elektromotor-Antriebssystem parallel zueinander, wobei die Ausgangsleistung des Elektromotor-Antriebssystemes im allgemeinen in Abhängigkeit von der Pedal-Niederdrückkraft eines Fahrers gesteuert wird, und mit einer Freilaufkupplung, die zwischen einer Antriebswelle und dem Elektromotor des Elektromotor-Antriebssystemes eingesetzt ist, **dadurch gekennzeichnet**, daß eine Erfassungseinrichtung (65) für die Pedal-Niederdrückkraft und eine Erfassungseinrichtung (84) für die Fahrradgeschwindigkeit vorgesehen sind, um von der Pedal-Niederdrückkraft und der Fahrradgeschwindigkeit abhängige Signale in eine Steuereinrichtung (82) einzugeben, die eine Drehzahl ($N_O$) des Elektromotors (22) bestimmt, die der Fahrzeuggeschwindigkeit (S) entspricht und ein Motordrehmoment ($T_M$) bestimmt, das der Pedal-Niederdrückkraft ($F_L$) bestimmt und eine Nichtbelastungs-Motorspannung ($V_{MO}$) als minimale Antriebsspannung des Elektromotors (22) bestimmt, die unabhängig von der erfaßten Pedal-Niederdrückkraft ($F_L$) ist.

4. Fahrrad nach Anspruch 3**, dadurch gekennzeichnet**, daß eine Kurbelwelle (32) des Muskelbetätigungs-Antriebssystemes über eine Freilaufkupplung (60) mit einer Antriebswelle (30) gekuppelt ist, die ihrerseits ein Hinterrad (14) des Fahrrades über eine weitere Freilaufkupplung (43) antreibt.

5. Fahrrad nach Anspruch 4, **dadurch gekennzeichnet**, daß die Erfassungseinrichtung (65) für die Pedal-Niederdrückkraft ein Signal durch die Freilaufkupplung (60) stromab der Kurbelwelle (32) aufnimmt und diese Erfassungseinrichtung (65) für die Pedal-Niederdrückkraft und die Erfassungseinrichtung (84) für die Fahrradgeschwindigkeit die Steuereinrichtung (82) speisen, die direkt den Elektromotor (22) steuert, wobei der Elektromotor (22) die Antriebswelle (30) über eine weitere Freilaufkupplung (48) und eine Untersetzungsgetriebevorrichtung (50) antreibt.

6. Fahrrad nach zumindest einem der vorhergehenden Ansprüche 3-5, **dadurch gekennzeichnet**, daß eine aufladbare Batterie (80) und die Steuereinrichtung (82) in einem Raum aufgenommen sind, der durch ein Rahmenteil zwischen einem Kopfrohr (12) und einem Sitzrohr (16) eines Hauptrahmens (10) des Fahrrades gebildet ist, während der Gleichstrom-Elektromotor (22) am unteren Ende des Sitzrohres (16) vorgesehen ist.

7. Fahrrad nach zumindest einem der vorhergehenden Ansprüche 3-6, **dadurch gekennzeichnet**, daß die Rotation der Antriebswelle (30) über ein Kegelradgetriebe (44) und die Freilaufkupplung (43) zu einer Habe (42) des Hinterrades (14) übertragen wird.

8. Fahrrad nach Anspruch 6 oder 7, **dadurch gekennzeichnet**, daß der Elektromotor (22) an einem Bodenhalterungsgehäuse (26) am unteren Ende des Sitzrohres (16) befestigt ist, wobei seine Motorwelle (22a) nahe der Mitte in Querrichtung des Fahrrades angeordnet ist, wobei die Motorwelle (22a) sich rechtwinklig zu der Kurbelwelle (32) erstreckt.

9. Fahrrad nach zumindest einem der vorhergehenden Ansprüche 1-8, **dadurch gekennzeichnet**, daß ein Drehmoment der Motorwelle (22a) des Elektromotors (22) über die Freilaufkupplung (48) des Planetenrad-Untersetzungsgetriebes (50) ein kleines Gegenrad (52) und ein großes Gegenrad (54) zu einer zylindrischen Resultantenkraftwelle (56) übertragen wird, die zur freien Rotation an der Kurbelwelle (32) gelagert ist, wobei die Rotation der Resultantenkraftwelle (56) durch eine Kegelradgetriebevorrichtung (58) auf die Antriebswelle (30) übertragen wird.

10. Fahrrad nach zumindest einem der vorhergehenden Ansprüche 1-9, **dadurch gekennzeichnet**, daß die Rotation, die von dem Hinterrad (14) in Richtung zu dem Elektromotor (22) übertragen wird, durch die Freilaufkupplung (43) unterbrochen wird, die in die Nabe (42) des Hinterrades (14) integriert ist.

11. Fahrrad nach zumindest einem der vorhergehenden Ansprüche 1-10, **dadurch gekennzeichnet**, daß die Muskelkraft-Eingabe an die Kurbelwelle (32) durch die Freilaufkupplung (60) und eine drehzahlerhöhende Planetenradgetriebevorrichtung (62) auf das große Kegelrad (54) übertragen wird.

12. Fahrrad nach Anspruch 11, **dadurch gekennzeichnet**, daß die drehzahlerhöhende Planetenradgetriebevorrichtung (62) ein Sonnenrad (62a), befestigt an einem großen Kegelrad (54), ein Ringrad (62b) befestigt, an einem Pedalkraft-Erfassungshebel (64) und ein Planetenrad (62c), das zwischen diesen Komponenten eingesetzt ist, aufweist, wobei das Planetenrad (62c) durch die Kurbelwelle (32) über die Freilaufkupplung (60) angetrieben wird.

13. Fahrrad nach zumindest einem der vorhergehenden Ansprüche 1-12, **dadurch gekennzeichnet**, daß die Pedalniederdrück-Erfassungseinrichtung (65) aufweist, einen ersten Hebel (64), der einen ersten und einen zweiten Vorsprung (64a, 64b) aufweist, von denen einer (64a) mit einem Anschlag (66) in Eingriff kommt, wenn der Hebel (64) im Uhrzeigersinn zu einer weiteren Drehung des ersten Hebels (64) im Uhrzeigersinn gedreht wird, während der andere (64b) mit einem zweiten Hebel (68) in Eingriff kommt, wenn der erste Hebel (64) im Gegen-Uhrzeigersinn gedreht wird und den zweiten Hebel (68) veranlaßt, in einer Uhrzeigerrichtung entgegen der Vorspannkraft einer Rückstellfeder (70) sich zu drehen, die eine Rückstellkraft auf den zweiten Hebel (68) überträgt.

14. Fahrrad nach Anspruch 13, **dadurch gekennzeichnet**, daß die Drehung des zweiten Hebels (68) auf ein Potentiometer (72) übertragen wird, das die Pedal-Niederdrückkraft ($F_L$) angibt.

**Revendications**

1. Procédé pour propulser une bicyclette comprenant, parallèlement l'un à l'autre, un système d'entraînement par force humaine, actionné par un cycliste, et un système d'entraînement par moteur électrique, la puissance de sortie du système d'entraînement par moteur électrique étant commandée en réponse à des variations d'une force d'enfoncement d'une pédale du système d'entraînement par force humaine, caractérisé par le fait qu'une vitesse de la bicyclette et la force ($F_L$) d'enfoncement de la pédale sont détectées ; et par le fait qu'une tension ($V_{MO}$) du moteur en l'absence de charge, à laquelle la vitesse angulaire ($N_O$) du moteur électrique (22) correspond à ladite vitesse de la bicyclette, est dérivée en tant que tension minimale d'entraînement délivrée au moteur électrique (22), quelle que soit la force détectée ($F_L$) d'enfoncement de la pédale.

2. Procédé selon la revendication 1, caractérisé par le fait que la vitesse angulaire ($N_O$) du moteur électrique (22) correspondant à la vitesse (S) de la bicyclette, et un couple moteur ($T_M$) correspondant à la force ($F_L$) d'enfoncement de la pédale, sont déterminés, et la tension ($V_{MO}$) du moteur en l'absence de charge est dérivée de ladite vitesse angulaire $(N_O)$.

3. Bicyclette comprenant parallèlement l'un à l'autre, un système d'entraînement par force humaine et un système d'entraînement par moteur électrique, la puissance de sortie dudit système d'entraînement par moteur électrique étant commandée, de manière générale, en fonction de la force d'enfoncement d'une pédale, appliquée par un cycliste, un embrayage unidirectionnel étant interposé entre un arbre menant et le moteur électrique du système d'entraînement par moteur électrique, caractérisée par le fait que des moyens (65) détecteurs de la force d'enfoncement de la pédale et des moyens (84) détecteurs de la vitesse de la bicyclette sont prévus pour entrer les signaux, répondant à la force d'enfoncement de la pédale et à la vitesse de la bicyclette, dans un dispositif de commande (82) déterminant une vitesse angulaire $(N_O)$ du moteur électrique (22) qui correspond à la vitesse (S) du véhicule, et un couple moteur $(T_M)$ qui correspond à la force $(F_L)$ d'enfoncement de la pédale, et une tension $(V_{MO})$ du moteur en l'absence de charge, représentant une tension minimale d'entraînement du moteur électrique (22) quelle que soit la force détectée $(F_L)$ d'enfoncement de la pédale.

4. Bicyclette selon la revendication 3, caractérisée par le fait qu'un vilebrequin (32) du système d'entraînement par force humaine est accouplé, par l'intermédiaire d'un embrayage unidirectionnel (60), à un arbre menant (30) qui, à son tour, entraîne une roue arrière (14) de la bicyclette par l'intermédiaire d'un autre embrayage unidirectionnel (43).

5. Bicyclette selon la revendication 4, caractérisée par le fait que les moyens(65) détecteurs de la force d'enfoncement de la pédale reçoivent un signal,par l'intermédiaire de l'embrayage unidirectionnel (60), en aval du vilebrequin (32) et desdits moyens (65) détecteurs de la force d'enfoncement de la pédale, et les moyens (84) détecteurs de la vitesse de la bicyclette alimentent le dispositif de commande (82) qui commande directement le moteur électrique (22), ledit moteur électrique (22) entraînant ledit arbre menant (30) par l'intermédiaire d'un autre embrayage unidirectionnel (48) et d'un mécanisme (50) à engrenage réducteur de vitesse.

6. Bicyclette selon au moins l'une des revendications précédentes 3 à 5, caractérisée par le fait qu'une batterie rechargeable (80) et le dispositif de commande (82) sont logés dans un espace formé par une pièce de cadre, entre une tubulure frontale (12) et une tubulure (16) de la selle d'un cadre principal (10) de la bicyclette, tandis que le moteur électrique (22) à courant continu est prévu à une extrémité inférieure de la tubulure (16) de la selle.

7. Bicyclette selon au moins l'une des revendications précédentes 3 à 6, caractérisée par le fait que la rotation de l'arbre menant (30) est transmise, par l'intermédiaire d'un mécanisme à pignons coniques (44) et de l'embrayage unidirectionnel (43), à un moyeu (42) de la roue arrière (14).

8. Bicyclette selon la revendication 6 ou 7, caractérisée par le fait que le moteur électrique (22) est fixé à un carter de pédalier (26) à l'extrémité inférieure de la tubulure (16) de la selle, son arbre (22a) étant situé à proximité du centre dans le sens transversal de la bicyclette, ledit arbre (22a) du moteur s'étendant perpendiculairement au vilebrequin (32).

9. Bicyclette selon au moins l'une des revendications précédentes 1 à 8, caractérisée par le fait qu'un couple de l'arbre (22a) du moteur électrique (22) est transmis, par l'intermédiaire de l'embrayage unidirectionnel (48), du mécanisme (50) à engrenage planétaire réducteur, d'un petit pignon conique (52) et d'un grand pignon conique (54), à un arbre cylindrique (56) à force résultante supporté, à rotation libre, par le vilebrequin (32), la rotation de l'arbre (56) à force résultante étant transmise à l'arbre menant (30) par l'intermédiaire d'un mécanisme à pignons coniques (58).

10. Bicyclette selon au moins l'une des revendications précédentes 1 à 9, caractérisée par le fait que la rotation, transmise de la roue arrière (14) en direction du moteur électrique (22), est interrompue par l'embrayage unidirectionnel (43) intégré dans le moyeu (42) de la roue arrière (14).

11. Bicyclette selon au moins l'une des revendications précédentes 1 à 10, caractérisée par le fait que la force humaine induite dans le vilebrequin (32) est transmise, au grand pignon conique (54), par l'intermédiaire de l'embrayage unidirectionnel (60) et d'un mécanisme (62) à engrenage planétaire multiplicateur de vitesse.

12. Bicyclette selon la revendication 11, caractérisée par le fait que le mécanisme (62) à engrenage planétaire multiplicateur de vitesse comprend une roue solaire (62a) fixée à un grand pignon conique (54), une couronne dentée (62b) fixée à une biellette (64) détectrice de la force de la pédale, et un pignon satellite (62c) interposé entre ces pièces structurelles, ledit pignon satellite (62c) étant entraîné par le vilebrequin (32), par l'intermédiaire de l'embrayage unidirectionnel (60).

13. Bicyclette selon au moins l'une des revendications précédentes 1 à 12, caractérisée par le fait que les moyens (65) détecteurs de l'enfoncement de la pédale comprennent une première biellette (64) présentant des première et seconde protubérances (64a, 64b), dont l'une (64a) vient coopérer avec une butée (66) lorsque la biellette (64) est animée d'une rotation dans le sens horaire, jusqu'à une poursuite de la rotation horaire de la première biellette (64), tandis que l'autre (64b) vient coopérer avec une seconde biellette (68) lorsque la première biellette (64) est animée d'une rotation dans le sens antihoraire, provoquant ainsi une rotation de ladite seconde biellette (68) dans le sens horaire, en s'opposant à la force de sollicitation d'un ressort de rappel (70) qui applique une force de rappel à la seconde biellette (68).

14. Bicyclette selon la revendication 13, caractérisée par le fait que la rotation de la seconde biellette (68) est transmise à un potentiomètre (72) qui indique la force ($F_L$) d'enfoncement de la pédale.

# FIG. 1

# FIG. 2

FIG. 3

## FIG. 4

## FIG. 5

$$T_M = \frac{1}{J}(V_M - kN)$$

$$T_M = \frac{1}{J}(V_{MO} - kN)$$

TM (MOTOR TORQUE)

N (MOTOR REVOLUTION)

FIG. 6

F (DRIVE FORCE)

FM (MOTOR DRIVE FORCE)

FL (PEDAL FORCE)

NO DELAY

T (TIME)

FIG. 7

CONVENTIONAL

FIG. 8